(19) Europäisches Patentamt
European Patent Office
Office européen des brevets

(11) Publication number: **0 076 281**
**B1**

(12) # EUROPEAN PATENT SPECIFICATION

(45) Date of publication of patent specification: **16.06.87**

(51) Int. Cl.$^4$: **G 01 K 17/02**

(21) Application number: **82900976.0**

(22) Date of filing: **01.04.82**

(86) International application number:
**PCT/GB82/00101**

(87) International publication number:
**WO 82/03457 14.10.82 Gazette 82/25**

(54) **IMPROVEMENTS IN OR RELATING TO HEAT METERING.**

(30) Priority: **08.04.81 GB 8111063**

(43) Date of publication of application:
**13.04.83 Bulletin 83/15**

(45) Publication of the grant of the patent:
**16.06.87 Bulletin 87/25**

(84) Designated Contracting States:
**DE FR SE**

(56) References cited:
**EP-A-0 000 401**
**DE-A-2 544 032**

**Mc Graw-Hill Encyclopedia of Science and Technology, Vol. 3, 1977, p. 576A, 576B**

**The file contains technical information submitted after the application was filed and not included in this specification**

(73) Proprietor: **The Secretary of State for Industry in Her Britannic Majesty's Government of the United Kingdom of Great Britain and Northern Ireland 1 Victoria Street London SW1H 0ET (GB)**

(72) Inventor: **EMERSON, Walter Hugh**
**11 Inglewood Crescent, East Kilbride**
**Glasgow, Scotland (GB)**

(74) Representative: **Wildman, David Brian et al**
**Procurement Executive Ministry of Defence**
**Patents 1A(4), Room 2014 Empress State**
**Building Lillie Road**
**London SW6 1TR (GB)**

**EP 0 076 281 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the transfer of thermal energy between a source and a consumer, and to means by which the quantity of thermal energy transferred can be measured, and is particularly related to combined heat and power schemes.

District heating schemes are coming increasingly into being, in which thermal energy generated centrally is supplied to individual consumer systems, for example to individual dwellings where it can be used for heating the interior thereof, and for the supply of hot water. Similar schemes operate on an industrial scale where the consumer might be a factory or other industrial undertaking. Such schemes have a number of advantages, in that a constant ready supply of thermal energy can be available to the consumer, and especially in that low-grade thermal energy can be utilised which might otherwise be wasted. In the latter respect, the so-called combined heat and power schemes are particularly economical, in which heat produced as an incidental to power generation can be put to useful effect instead of creating a disposal problem.

In the most usual method of distribution, thermal energy is supplied to users by a system of main pipes carrying hot water, often under relatively high pressure. Of course, other heat transfer media such as steam can be used instead of water.

In order to provide a fair basis for charging related to consumption, the thermal energy transferred between the main and the consumer needs to be measured. The direct method of approach involves measurement of supply and return temperatures of heat transfer medium and its flowrate. The thermal energy consumed can then be calculated from the product of three factors, i.e. the temperature difference, the flowrate, and the time interval. An instrument which provides a reading of thermal energy consumed in this way is called a true heat meter.

In most practical cases the temperature difference and/or the flowrate will vary with time, and the instrument must then be capable of calculating the aforesaid product over short successive time intervals and summating the results. This makes for a relatively complex instrument, which can be simplified to some degree by keeping one or more factors constant (i.e. flowrate, and/or supply temperature, and/or return temperature). However, this in itself introduces further complexity as well as imposing constraints on the system which may have practical disadvantages. Such meters always need some form of flowrate meter which is required to measure the flowrate of a hot heat transfer medium which is usually impure and carrying dirt in suspension. Most flowrate meters are unsuitable for such an environment, and this gives rise to frequent failures. In many cases the flowrate meter is required to measure a range of flowrates down to very low rates. For this purpose a very sensitive meter is required, but such a meter is particularly unsuitable for use with hot, dirty liquids.

As an alternative to the true heat meter, there a known a number of different types of "apportioning meter" which do not themselves measure heat consumption, but employ some means of indication which varies in accordance with the heat emission from a heat exchanger. If each consumer has a similar meter, the total quantity of heat used by the group can be apportioned among the individual consumers. Some physical phenomena commonly exploited in this type of meter are evaporation of a liquid, metallic creep, thermocouple e.m.f. and variation with temperature of the resistance of certain electrical resistors. These devices still require some measurement of the total quantity of heat consumed by the group and tend to be rather rough and ready in their apportionment.

In addition, there are also known proportional meters in which a proportion of the hot liquid drawn from the supply main by a consumer is diverted into a measuring system. Such proportional meters are described for example, in GB—A—1199311; GB—A—701832; GB—A—672476 and GB—A—192610. These meters are very prone to inaccuracy because they rely upon a constant proportion of the hot liquid being diverted to the measuring system. This is exceedingly difficult to achieve where the flowrate of liquid drawn from the main is variable. In each of these proportional meters the heat in the diverted liquid is simply wasted, and hence to minimise this serious disadvantage it is important to keep the proportion diverted to the meter as small as possible. This compounds the difficulty of ensuring that a constant proportion is diverted. The meters described in GB—A—1199311; GB—A—672476; and GB—A—192610 are all of a calorimetric type which cannot operate continuously and in which the quantity of hot liquid which can be metered at any one tapping is limited by the capacity of the meter. The meter must be allowed time to return to ambient temperature before a further tapping takes place, or further inaccuracy will result.

In GB—A—400821; and GB—A—251379, there are disclosed systems in which heat is distributed from a central source through a main which carries steam. Each consumer is provided with a heat exchanger through which heat is provided to the consumer's heating system. A liquid flowmeter measures the volume of liquid condensed from the main as the result of heat supplied to the consumer through his individual heat exchanger, and the volume of condensate can be related to the heat consumed. Such systems, however, suffer from a number of disadvantages. In order to provide an accurate indication, the steam supplied and the water returned must be at known, preferably constant temperature, otherwise an unmetered flow of heat will take place as a result of unknown variations in supply and return temperatures. Another difficulty is that the flow meter must be capable of registering accurately over a wide range of flowrates. Available meters capable of meeting this requirement are not normally sufficiently rugged to withstand working with hot, dirty liquids such as would be encountered in a steam main.

A need therefore exists for a true heat meter of reasonably simple form which is capable of reasonably accurate measurements, and which avoids the difficulties associated with requiring a sensitive flowmeter to measure the flowrate of hot dirty heat transfer medium.

In many instances, it is desirable to isolate the main from the consumer's heating system, especially where the main is at high pressure, and this is commonly done by employing a heat exchanger through which heat is transferred from the main to the consumer's system without any fluid communication occurring between the two systems.

In EP—A—0 000 401 there is disclosed a district heating scheme in which a thermosiphon is employed to transfer and meter heat supplied to the consumer, by use of a liquid flowmeter which meters the volume of condensate, hence to provide an indication of heat consumed. An advantage of this arrangement is that as well as pressure isolation, a substantial temperature drop can occur between the main (which is usually at a very high temperature) and the consumer circuit (which is required to be at a considerably lower temperature). However this is a considerable disadvantage in a combined heat and power scheme, where the supply is at a relatively low temperature, and for maximum efficiency heat transfer is required at minimum temperature difference between main and consumer circuits. For this reason, systems of this kind are not suitable for use in combined heat and power district heating scheme. Each thermosiphon as used in EP—A—0 000 401 has provision for varying its pressure and temperature of operation. The associated flowmeter has to include compensating means to allow for variations, and consequently is extremely complicated.

The temperature is controlled by means of a valve which opens and closes in response to pressure changes. The pressure at which the valve opens and closes can be varied to control the amount of heat transferred.

According to the present invention, there is provided a device for the transfer of heat from a heat supply duct to a receiver duct, and for the metering of the total quantity of thermal energy transferred thereby the device comprising a thermosiphon constituted by a hermetically sealed vessel containing a working fluid in the form of a liquid in contact with its vapour, the thermosiphon including an evaporator through which, in use, heat is transferred from the supply duct to the working fluid, a condenser through which, in use, heat is transferred from the working fluid to the receiver duct, and a vapour passage through which, in use, vapour flows from the evaporator to the condenser, a liquid passage through which, in use, liquid condenser returns from the condensate to the evaporator, characterised in that the working fluid performs a substantially constant temperature cycle of evaporation and condensation within the thermosiphon and transfers from the supply duct to the receiver duct a quantity of heat which is directly related to the quantity of liquid measured by measuring means positioned in the liquid passage, the device including a plurality of the said thermosiphons each constituted by a distinct sealed vessel, the evaporators of the thermosiphons being successively disposed along the supply duct in the intended direction of flow through the supply duct, and the corresponding condensers of the thermosiphons being successively disposed along the receiver duct in the direction opposite to the intended direction of flow through the receiver duct.

Preferably, the means for measuring the quantity of liquid which flows through each liquid passage comprises, in each liquid passage, a flowmeter of a kind which produces a pulsed electrical output, each pulse representing a quantum of volume or mass of the flow therethrough.

Conveniently, the pulsed output of each liquid flowmeter is transmitted to a counting device which counts the number of electrical pulses received.

The counting device may advantageously be capable of a display representing the total number of electrical pulses on a scale calibrated in units of heat transferred.

In one convenient arrangement, each thermosiphon has a plurality of distinct evaporators and a plurality of distinct condensers, the distinct evaporators being connected to the distinct condensers by a commom liquid passage, the distinct evaporators of each thermosiphon being arranged to extend transversely with respect to the direction of flow in the supply duct, and the distinct condensers of each thermosiphon being arranged to extend transversely with respect to the direction of flow in the receiver duct.

The said distinct evaporators may then be connected to the said distinct condensers by a common vapour passage.

Alternatively, the supply duct may be split into a plurality of distinct supply duct portions which pass through the sealed vessel, each supply duct portion being defined at least in part by a wall which seals the interior of the said supply duct portion from the interior of the sealed vessel and constitutes a part of the respective evaporator.

The receiver duct may also be split into a plurality of distinct receiver duct portions which pass through the sealed vessel, each receiver duct portion being defined at least in part by a wall which seals the interior of the portion from the interior of the sealed vessel and constitutes a part of the respective condenser.

It will be realised that systems having counterflow heat exchange systems are well known in nature, as is explained in the McGraw-Hill Encyclopedia of Science and Technology, Vol. 3, 1977, pages 576A and 576B.

The invention will now be described by way of

example only with reference to the accompanying drawings, of which

Figure 1 is a schematic longitudinal sectional elevation of a heat exchanger comprising a plurality of thermosiphons,

Figure 2 is a schematic end elevational view in section of the heat exchanger shown in Figure 1,

Figure 3 illustrates graphically the temperatures obtaining in the fluids when the heat exchanger of Figures 1 and 2 is operated in counter-current fluid flow,

Figure 4 is a schematic end elevational view in section of a device for the transfer and metering of thermal energy for use with the invention,

Figure 5 illustrates graphically the temperature distribution obtaining in a less preferred embodiment of the invention,

Figure 6 is a sectional view of another device for use with the invention, and

Figure 7 is a schematic longitudinal sectional elevation of an arrangement employing a plurality of devices as shown in Figure 6.

As shown in Figures 1 and 2, heat exchanger comprises a heat supply duct 1 forming part of a supply main for carrying a flow of hot fluid and a receiver duct 2 above the duct 1 for carrying a flow of cooler fluid forming part of a consumer system such as a domestic heating circuit. The intended directions of flow of the hot and cooler fluids are indicated in Figure 1 by the respective arrows H and C. Heat can be transferred between fluids in the ducts 1 and 2 via a plurality of mutually independent thermosiphons 3. As seen in Figure 2, the thermosiphons are arranged in rows extending transversely across the ducts, and as seen in Figure 1 there are a plurality of such rows disposed at successive locations longitudinally of the duct. Each thermosiphon is in the form of a hermetically sealed cylindrical vessel containing a liquid in contact with its vapour (not shown) — water being a particularly suitable liquid where the ducts 1 and 2 are to carry water. The lower part 5 of the wall of each thermosiphon protrudes into and across the supply duct 1, and this area of the vessel wall constitutes a first heat transfer area which serves as an evaporator area. The upper part 4 of the wall of each thermosiphon protrudes into and across the receiver duct 2, and this area of the vessel wall constitutes a second heat transfer area which serves as a condenser area.

In use of such a heat exchanger, hot and cooler water flow respectively in countercurrent through the heat supply duct 1 and the receiver duct 2 as indicated by the arrows H and C. Water sealed within each thermosiphon vessel 3 boils within the evaporator area 5 as a result of heat transferred from the water in the duct 1. Vapour thus created rises up within the vessel 3 and condenses within the cooler condenser area 4 of the vessel wall, giving up its latent heat of vaporisation which is transferred through the wall to the cooler fluid in the duct 2. The condensate runs back under gravity down the sides of the vessel 3 into the evaporator area 5 where it can boil again. This is a conventional operation of a thermosiphon, in which it acts as a highly efficient thermal conductor.

In order to provide a measure of the quantity of thermal energy transferred, each thermosiphon is provided with means (not shown) for measuring the quantity of condensate returned to the evaporator. In practice this will most readily be achieved by providing separate flow paths for vapour and condensate. The volume of condensate descending to the evaporator is exactly related to the quantity of heat transferred from the duct 1 to the duct 2 by the equation:—

$$Q = VLD$$

where

Q is the quantity of heat transferred

D is the density of the liquid in the vessel 3

L is the latent heat of vaporisation of the liquid in the vessel 3

V is the volume of condensate descending.

Thus, if the product LD can be assumed constant, the volume of condensate is in direct proportion to the quantity of heat transferred, and measuring that volume is a simple and effective way of determining the quantity of heat transferred.

A most suitable fluid for use in the thermosiphon vessel 3 is water, for which the value of LD varies slightly with temperature. The temperature of the water in each vessel 3 is always between the temperature of the hot fluid in supply duct 1 and that of the cooler fluid in receiver duct 2. Typically in use in a district heating scheme it might vary from 80 to 100°C, and in that range the product LD varies by 2%. If an average value were used, the maximum error from this cause would thus be only ±1%.

Thus, by measuring only the quantity of liquid condensate flowing down through each vessel 3 during a given period, and summing the values for each vessel, an indication of the heat transferred is readily obtainable.

In order to obtain good heat transfer, an array of heat transfer elements, as for example in Figures 1 and 2, is desirable. However, the provision of separate flowmeter for each of such a large number of separate thermosiphons, and means to summate their readings, is inconvenient and expensive. In Figure 4 there is shown a heat exchange device comprising a single thermosiphon 30 having a plurality of distinct condenser areas in the form of cylindrical tubular elements 34, and a plurality of distinct evaporator areas in the form of cylindrical tubular elements 35. The evaporator areas 35 are arranged transversely across a heat supply duct 1 for hot water so that the hot water can flow between them for good heat transfer, and the condenser areas 34 are similarly arranged transversely across a receiver duct 2 for cooler water. The lower ends of the evaporators are connected to a common sump 41, and the lower ends of the condensers are connected to a common sump 40. The sumps

40 and 41 are interconnected through a a single downcomer or liquid passage 42, so that all condensate from the condenser areas 34 drains through the sump 40, via the liquid passage 42, to the sump 41. The upper ends of the evaporators are connected by a common header space 43, and the upper ends of the condensers are connected by a common header space 44, the spaces 43 and 44 being connected by a single vapour passage 45. The condensers defined by the condenser areas 34, the evaporators defined by the evaporator areas 35, the sumps 40 and 41, the header spaces 43 and 44 and the passages 42, 45 collectively define a hermetically sealed vessel constituting the single thermosiphon 30.

A liquid flowrate meter 46 is located in the downcomer 42 to measure the fluid flow therethrough. The meter 46 is of a kind which produces a pulsed electrical output, each pulse representing a quantum of volume of the flow therethrough. The pulsed output is transmitted via an electrical connection 47 to a counting and display device 48, which counts the number of electrical pulses received, and displays the total on a scale calibrated in units of thermal energy consumed.

It is intended that a thermosiphon 30 should replace each transverse row of thermosiphons 3 such as those shown in Fig. 2, so that only a single flowmeter is needed for each transverse row instead of one for each thermosiphon 3.

In the heat exchanger shown in Figures 1 and 2, there are eight transverse rows of the thermosiphons 3. Such an array will typically give temperature profiles as shown in Figure 3 for countercurrent flow where $t_h$ is the temperature of the hot liquid in duct 1, $t_c$ is the temperature of the cold liquid in duct 2, and x represents distance in the longitudinal direction of flow in the duct 1. Similar profiles will be obtained when each transverse row of thermosiphons 3 is replaced by a single thermosiphon 30. Each thermosiphon 30 must have its own flowmeter 46, but if the flowmeters are each calibrated to produce electrical pulses representing the same volume of liquid, connections 47 can feed the outputs of all flowmeters 46 to a common counting and display device 48. Although a plurality of flowmeters are required, a single counting and display device is sufficient.

For a pure countercurrent heat exchanger transferring the maximum quantity of heat, an infinite number of thermosiphons 30 would be required theoretically. However, considerable cost saving with very little loss of performance can be obtained by providing only three thermosiphons 30 of comparable surface area. In many systems, satisfactory performance may be achieved with only two such thermosiphons 30, with thus only two flowmeters required.

It might be thought that further savings could be achieved by having a plurality of thermosiphons 30 modified to have a single liquid downcomer 42 common to them all. Only a single flowmeter would then be required for the entire device. This approach would not give very satisfactory results because as illustrated in Figure 5, the temperature of the liquid within the linked vessels 30 would assume the same value $t_s$ in each vessel 30. The temperature $t_h$ of the hot liquid could not fall below $t_s$ and the temperature $t_c$ of the cooler liquid could not rise above $t_s$, no matter how many thermosiphons 30 were used. Thus, although only a single flowmeter would be required, the heat transfer would be inefficient as compared with the true countercurrent arrangement described with reference to Figures 1 to 4.

It will be apparent that the thermosiphon through which heat is conveyed from source to sink need not consist of tubular elements constituting the evaporator and/or condenser areas, nor needs any such elements be vertically orientated. As a further example, Figure 6 illustrates an embodiment of the invention in which a shell boiler arrangement is used for both evaporator and condenser. Alternatively, a plate boiler or other suitable heat exchange device might be used.

As shown in Figure 6, a thermosiphon, for use in a device according to the invention, for the transfer of heat from a supply fluid flowing in a supply main 51 to a consumer fluid flowing in a receiver duct 52 forming part of a consumer system comprises a boiler 53 and a condenser 54 each of shell and tube design.

The boiler 53 comprises a hot water box 55 having a flanged inlet connection into an upstream arm of the supply main 51 and a second hot water box 56 having a flanged outlet connection into a downstream arm of the supply main 51. The boxes 55 and 56 are connected together by a plurality of tubes 57, so that within the boiler 53 the supply main duct is split into a plurality of distinct supply duct portions constituted by the tubes 57.

The condenser 54 comprises a receiver water box 58 having a flanged inlet connection into an upstream arm of the receiver duct 52, and a second receiver water box 59 having a flanged outlet connection into a downstream arm of the receiver duct 52. The boxes 58 and 59 are connected together by a plurality of tubes 60, so that within the condenser 54 the receiver duct 52 is split into a plurality of distinct receiver duct portions constituted by the tubes 60.

Heat can be transferred from the boiler 53 to the condenser 54 by means of a thermosiphon comprising a boiler shell 68, a condenser shell 62, a vapour passage 63 and a liquid downcomer 64, the elements 68, 62, 63 and 64 together constituting a hermetically sealed vessel containing a liquid and its vapour.

The boiler shell 68 is bounded in part by walls of the boxes 55, 56 and the tubes 57 pass through the shell 68. Hot liquid (water) constituting a heat source flowing through the supply duct 51 can thus transfer heat to the thermosiphon fluid through those bounding walls of the boxes 55, 56, and the walls of the tubes 57, which walls thus constitute evaporator areas of the thermosiphon.

The condenser shell 62 is bounded in part by the walls of the boxes 58, 59 and the tubes 60 pass through the shell 62. Cooler liquid constituting a heat sink flowing through the receiver duct 52 can thus receive heat from the thermosiphon fluid through those bounding walls of the boxes 58 and 59, and the walls of the tubes 60, which walls thus constitute condenser areas of the thermosiphon.

During the heat transfer process, liquid boils in the boiler shell 68, rises up the vapour passage 63, condenses in the condenser shell 62, and returns under gravity through the downcomer 64 to the boiler shell 68. This cycle is continuously performed by the thermosiphon fluid during the heat transfer process.

In order to provide a measure of the quantity of heat transferred, a flowmeter 65 is included in the downcomer 64, which provides a pulsed output via an electrical connection 66 to a counting and display device 67. The operation is the same as that of the flowmeter 46 and counting and display device 48.

In order to provide for more efficient heat exchange, a plurality of separate thermosiphons each for example as shown in Figure 6 and each comprising a boiler 53 and a condenser 54, can be provided as illustrated in Figure 7. In use the hot fluid constituting the heat source flows in the duct 61 in the direction of the arrow H, and the cooler fluid constituting the heat sink flows in counterflow thereto in the duct 62, in the direction of the arrow C. The temperature distribution along the ducts 61 and 62 will be substantially as shown in Figure 3, i.e. substantially as for a true countercurrent heat exchanger. Although three thermosiphons as shown in Figure 7 will often provide the best compromise between performance and economy, arrangements with either two or four or more thermosiphons are possible. It should be noted that a separate flowmeter 65 is required for each thermosiphon, although it can be arranged that the outputs of all flowmeters are summed and displayed in a single counting and display device. This can be done readily where the flowmeters 65 provide a pulsed output, each pulse representing the same unit of volume.

It will be apparent to those skilled in the art that the present invention provides many advantages in the supply of metered quantities of thermal energy. Conventional heat meters have to measure not only volume, but also two temperatures, and a complicated integration of the product of the several variables must be performed. Their accuracy is usually limited by the accuracy with which the difference between the two temperatures can be measured, when the difference is small. The present invention provides a system in which no temperature measurement or complicated calculation is required.

Furthermore, the flowmeter required in the conventional heat meter has to cope with the hot dirty working fluid in the main or the domestic system. In the present invention, as in EP—A—0 000 401 the liquid which is metered is the relatively small quantity recirculated continuously within the thermosiphon vessel. This liquid can be of a high degree of purity so that the adverse effect on the flowmeter is avoided, irrespective of the quality of the fluid in the main or domestic circuit.

Heat metering devices according to the present invention and to EP—A—0 000 401 also have the affect of isolating the main from the consumer's circuit. This can be important where the main is at high pressure.

**Claims**

1. A device for the transfer of heat from a heat supply duct (1, 51, 61) to a receiver duct (2, 52, 62), and for the metering of the total quantity of thermal energy transferred thereby, the device comprising a thermosiphon constituted by a hermetically sealed vessel (3) containing a working fluid in the form of a liquid in contact with its vapour, the thermosiphon including an evaporator (5, 53) through which, in use, heat is transferred from the supply duct (1, 51, 61) to the working fluid, a condenser (4, 54) through which, in use, heat is transferred from the working fluid to the receiver duct (2, 52, 62) and a vapour passage (63) through which, in use, vapour flows from the evaporator to the condenser (4, 54), a liquid passage (64) through which, in use, liquid condensate returns from the condenser (4, 54) to the evaporator (5, 53), characterised in that the working fluid performs a substantially constant temperature cycle of evaporation and condensation within the thermosiphon and transfers from the supply duct (1, 51, 61) to the receiver duct (2, 52, 62) a quantity of heat which is directly related to the quantity of liquid measured by measuring means (65) positioned in the liquid passage (64), the device including a plurality of the said thermosiphons each constituted by a distinct sealed vessel (3) the evaporators (5, 53) of the thermosiphons being successively disposed along the supply duct (1, 51, 61) in the intended direction of flow through the supply duct, and the corresponding condensers (4, 54) of the thermosiphons being successively disposed along the receiver duct (2, 52, 62) in the direction opposite to the intended direction of flow through the receiver duct.

2. A device as claimed in claim 1 characterised in that the means (65) for measuring the quantity of liquid which flows through each liquid passage (64) comprises, in each liquid passage, a flowmeter of a kind which produces a pulsed electrical output, each pulse representing a quantum of volume or mass of the flow therethrough.

3. A device as claimed in claim 2 characterised in that the pulsed output of each liquid flowmeter (65) is transmitted to a counting device which counts the number of electrical pulses received.

4. A device as claimed in claim 3 characterised in that the counting device is capable of a display representing the total number of electrical pulses on a scale calibrated in units of heat transferred.

5. A device as claimed in any one preceding

claim characterised in that each thermosiphon has a plurality of distinct evaporators (35) and a plurality of distinct condensers (34), the distinct evaporators (35) being connected to the distinct condensers (34) by a common liquid passage (42) the distinct evaporators (35) of each thermosiphon being arranged to extend transversely with respect to the direction of flow in the supply duct (1), and the distinct condensers (34) of each thermosiphon being arranged to extend transversely with respect to the direction of flow in the receiver duct (2).

6. A device as claimed in claim 5 characterised in that the said distinct evaporators (35) are connected to the said distinct condensers (34) by a common vapour passage (45).

7. A device as claimed in claim 1 characterised in that the supply duct (51) when passing through each sealed vessel (3) is split into a plurality of distinct supply duct portions (57) which pass through the sealed vessel (3), each supply duct portion (57) being defined at least in part by a wall which seals the interior of the said supply duct portion from the interior of the sealed vessel and constitutes a part of the respective evaporator (53).

8. A device as claimed in claim 7 characterised in that the receiver duct (52) when passing through each sealed vessel (3) is split into a plurality of distinct receiver duct portions (60) which pass through the sealed vessel (3), each receiver duct portion (60) being defined at least in part by a wall which seals the interior of the portion from the interior of the sealed vessel and constitutes a part of the respective condenser (54).

**Patentansprüche**

1. Vorrichtung zum Übertragen von Wärme von einer Wärmezufuhrleitung (1, 51, 61) auf eine Empfängerleitung (2, 52, 62) und zum Messen der gesamten somit übertragenen Wärmemenge mit einem Thermosiphon, bestehend aus einem hermetisch abgedichteten Gefäß (3), das ein Arbeitsfluid in Form einer Flüssigkeit in Kontakt mit ihrem Dampf enthält, wobei das Thermosiphon einen Verdampfer (5, 53) aufweist, durch den im Betrieb Wärme von der Zufuhrleitung (1, 51, 61) auf das Arbeitsfluid übertragen wird, mit einem Verdichter (4, 54), durch den im Betrieb die Wärme vom Arbeitsfluid auf die Empfängerleitung (2, 52, 62) übertragen wird und einen Dampfdurchgang (63), durch den im Betrieb Dampf vom Verdampfer zum Verflüssiger (4, 54) strömt, einer Flüssigkeitspassage (64), durch die während des Betriebs flüssiges Kondensat vom Verdichter (4, 54) zum Verdampfer (5, 53) zurückfließt, dadurch gekennzeichnet, daß das Arbeitsfluid im wesentlichen Verdampfungs- und Verdichtungszyklen bei konstanter Temperatur innerhalb des Thermosiphons durchführt und von der Zufuhrleitung (1, 51, 61) zur Empfängerleitung (2, 52, 62) eine Wärmemenge überträgt, die direkt mit der Flüssigkeitsmenge in Beziehung steht, die durch Meßgeräte (65) gemessen wird, wobei die Meßgeräte in der Flüssigkeitspassage (64) angeordnet sind und die Vorrichtung mehrerer solcher Thermosiphons aufweist, die jeweils aus einem getrennten isolierten Behälter (3) bestehen; wobei die Verdampfer (5, 53) der Thermosiphons nacheinander entlang der Versorgungsleitung (1, 51, 61) in der beabsichtigten Flußrichtung durch die Versorgungsleitung angeordnet sind und entsprechende Verdichter (4, 54) der Thermosiphons aufeinander folgend entlang der Empfängerleitung (2, 52, 62) in entgegengesetzter Richtung zur beabsichtigten Richtung des Flusses durch die Empfängerleitung angeordnet sind.

2. Vorrichtung nach Anspruch 1, dadurch gekennzeichnet, daß die Apparate (65) zum Messen der Flüssigkeitsmenge, die durch jede Flüssigkeitspassage (64) fließt in jeder Flüssigkeitspassage einen Durchflußmesser aufweisen, der ein gepulstes elektrisches Ausgangssignal erzeugt, wobei jeder Impuls ein Volumen oder Massenquantum des Flusses durch die Passage wiedergibt.

3. Vorrichtung nach Anspruch 2, dadurch gekennzeichnet, daß das gepulste Ausgangssignal eines jeden Flüssigkeitsflußmessers (65) an eine Zählvorrichtung übertragen wird, die die Anzahl der empfangenen elektrischen Impulse zählt.

4. Vorrichtung nach Anspruch 3, dadurch gekennzeichnet, daß die Zählvorrichtung eine Anzeige liefern kann, die die Gesamtzahl der elektrischen Impulse auf einer kalibrierten Skala in Einheiten der übertragenen Wärme darstellen kann.

5. Vorrichtung nach einem der vorstehenden Ansprüche, dadurch gekennzeichnet, daß jedes Thermosiphon mehrere getrennte Verdampfer (35) und mehrere getrennte Verdichter (34) aufweist, wobei die getrennten Verdampfer (35) mit den getrennten Verdichten (34) durch eine gemeinsame Flüssigkeitspassage (42) verbunden sind und die getrennten Verdampfer (35) eines jeden Thermosiphons so angeordnet sind, daß sie sich quer bezüglich der Flußrichtung in der Versorgungsleitung (1) erstrecken und wobei die getrennten Verdichter (34) eines jeden Thermosiphons derart angeordnet sind, daß si sich quer bezüglich der Flußrichtung in der Empfängerleitung (2) erstrecken.

6. Vorrichtung nach Anspruch 5, dadurch gekennzeichnet, daß die getrennten Verdampfer (35) über eine gemeinsame Dampfleitung (45) mit den getrennten Verdichtern (34) verbunden sind.

7. Vorrichtung nach Anspruch 1, dadurch gekennzeichnet, daß die Versorgungsleitung (51) beim Durchgang durch jeden isolierten Behälter (3) in mehrere getrennte Versorgungsleitungsteile (57) aufgespalten ist, die durch den isolierten Behälter (3) verlaufen, wobei jeder Versorgungsleiterteil (57) mindestens teilweise durch eine Wandung definiert wird, die das Innere des Versorgungsleiterteils vom Inneren des isolierten Behälters isoliert und einen Teil des jeweiligen Verdampfers bildet.

8. Vorrichtung nach Anspruch 7, dadurch gekennzeichnet, daß die Empfängerleitung (52) beim Durchgang durch den isolierten Behälter (3) in mehrere getrennte Empfängerleitungsteile (60) aufgespalten ist, die durch isolierten Behälter (3) verlaufen, wobei jeder Empfängerleitungsteil (60) mindestens teilweise durch eine Wandung definiert wird, die die Innenseite des Teils von der Innenseite des isolierten Behälters abdichtet und einen Teil des jeweiligen Verdichters (54) bildet.

**Revendications**

1. Dispositif pour le transfert de chaleur d'un conduit (1, 51, 61) d'alimentation en chaleur vers un conduit récepteur (2, 52, 62), et pour la mesure de la quantité totale d'énergie thermique ainsi transférée, le dispositif comprenant un thermosiphon constitué par un récipient (3) hermétiquement clos, contenant un fluide de travail sous la forme d'un liquide en contact avec sa vapeur, le thermosiphon comprenant un évaporateur (5, 53) par l'intermédiaire duquel, en service, de la chaleur est transférée du conduit (1, 51, 61) d'alimentation vers le fluide de travail, un condenseur (4, 54) par l'intermédiaire duquel, en service, de la chaleur est transférée du fluide de travail au conduit récepteur (2, 52, 62) et un passage (63) de vapeur par l'intermédiaire duquel, en service, la vapeur s'écoule de l'évaporateur vers le condenseur (4, 54), un passage (64) de liquide par l'intermédiaire duquel, en service, le condensat liquide retourne du condenseur (4, 54) vers l'évaporateur (5, 55), dispositif caractérisé en ce que le fluide de travail effectue un cycle, à température essentiellement constante, d'évaporation et de condensation au sein du thermosiphon et transfère du conduit (1, 51, 61) d'alimentation au conduit récepteur (2, 52, 62) une quantité de chaleur qui est directement liée à la quantité de liquide mesurée par un moyen (65) de mesure placé dans le passage (64) de liquide, le dispositif comprenant plusieurs desdits thermosiphons dont chacun est constitué par un récipient (3) clos distinct, les évaporateurs (5, 53) des thermosiphons étant disposés en succession le long du conduit (1, 51, 61) d'alimentation dans la direction d'écoulement prévue dans le conduit d'alimentation, et les condenseurs (4, 54) correspondants des thermosiphons étant disposés en succession le long du conduit récepteur (2, 52, 62) dans la direction opposée à la direction d'écoulement prévue dans le conduit récepteur.

2. Dispositif selon la revendication 1, caractérisé en ce que le moyen (65) pour mesurer la quantité de liquide qui s'écoule dans chaque passage (64) de liquide comprend, dans chaque passage de liquide, un débitmètre d'un genre produisant un signal électrique pulsé de sortie, chaque impulsion représentant une quantité de volume ou de masse d'écoulement (débit masse) passant dans ce passage.

3. Dispositif selon la revendication 2, caractérisé en ce que le signal pulsé de sortie de chaque débitmètre (65) de liquide est transmis à un dispositif de comptage qui compte le nombre d'impulsions électriques reçues.

4. Dispositif selon la revendication 3, caractérisé en ce que le dispositif de comptage est capable d'effectuer un affichage représentant le nombre total d'impulsions électriques, sur une échelle étalonnée en unités de chaleur transférée.

5. Dispositif selon l'une quelconque des revendications précédentes, caractérisé en ce que chaque thermosiphon possède plusieurs évaporateurs (35) distincts et plusieurs condenseurs (34) distincts, les évaporateurs (35) distincts étant reliés aux condenseurs (34) distincts par un passage (42) commun de liquide, les évaporateurs (35) distincts de chaque thermosiphon étant agencés de façon à s'étendre transversalement par rapport à la direction d'écoulement dans le conduit (1) d'alimentation, et les condenseurs (34) distincts de chaque thermosiphon étant agencés pour s'étendre transversalement par rapport à la direction d'écoulement dans le conduit récepteur (2).

6. Dispositif selon la revendication 5, caractérisé en ce que lesdits évaporateurs (35) distincts sont reliés auxdits condenseurs (34) distincts par un passage (45) commun de vapeur.

7. Dispositif selon la revendication 1, caractérisé en ce que, lors de son passage par chaque récipient (3) clos, le conduit (51) d'alimentation est subdivisé en plusieurs parties (57) distinctes de conduits d'alimentation qui passent par le récipient (3) clos, chaque partie (57) de conduit d'alimentation étant délimitée au moins en partie par une paroi qui isole l'intérieur de ladite partie du conduit d'alimentation par rapport à l'intérieur du récipient clos et constitue une partie de l'évaporateur (53) respectif.

8. Dispositif selon la revendication 7, caractérisé en ce que le conduit récepteur (52) est, lors de son passage par le récipient (3) clos, subdivisé en plusieurs parties (60) distinctes de conduit récepteur qui passant par le récipient (3) clos, chaque partie (60) de conduit récepteur étant délimitée, au moins en partie, par une paroi qui isole l'intérieur de cette partie de conduit par rapport à l'intérieur du récipient clos et constitue une partie du condenseur (54) respectif.

Fig.1.

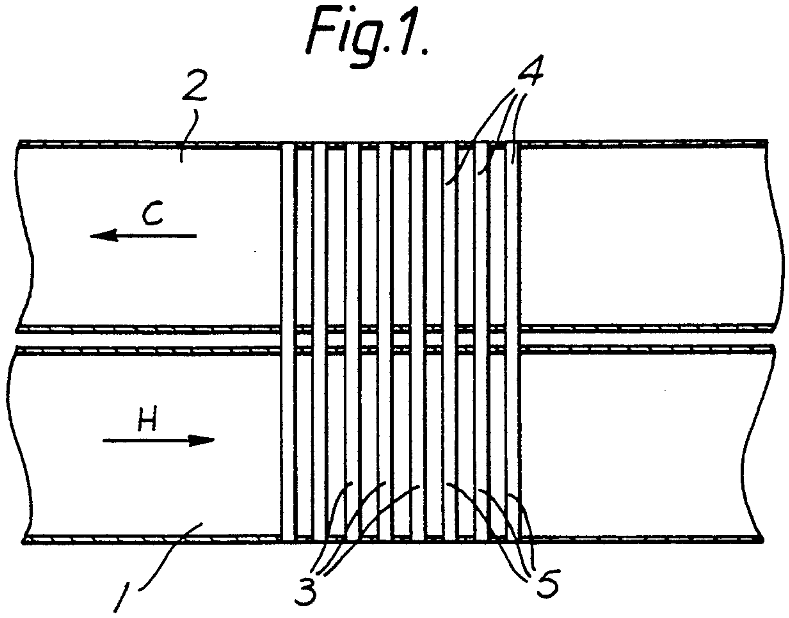


Fig.2.

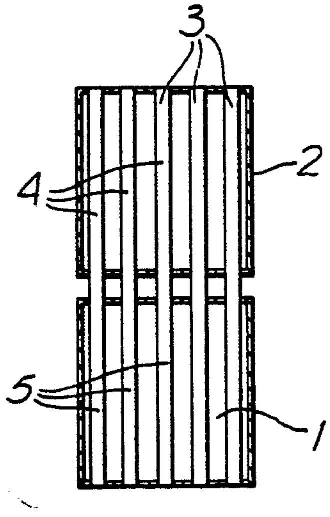


Fig.3.

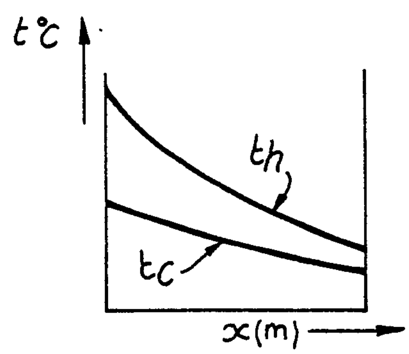

Fig.4.

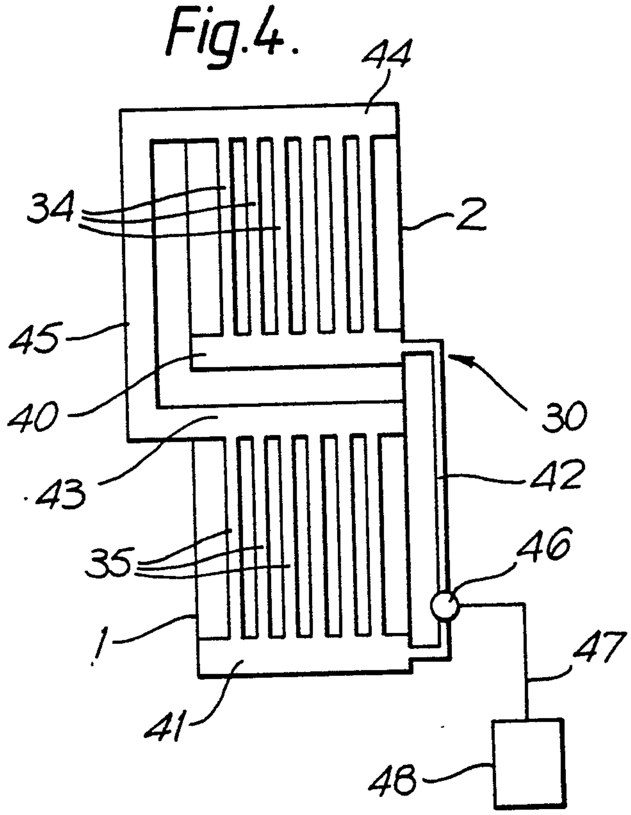


Fig.5.

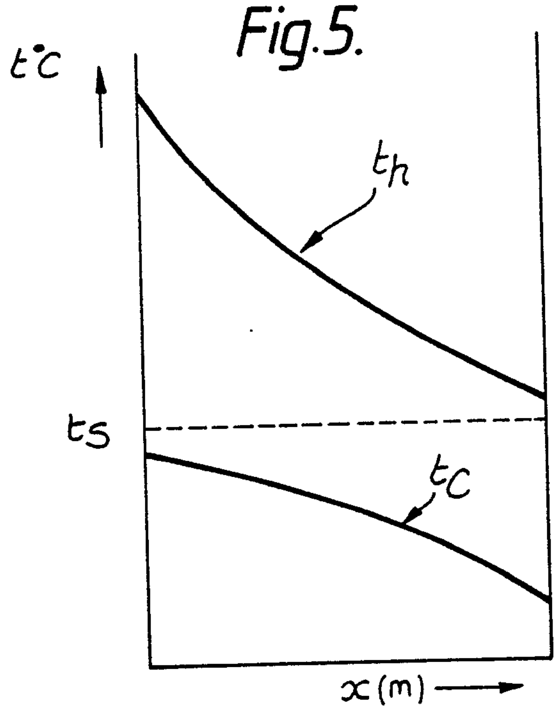

Fig. 6.

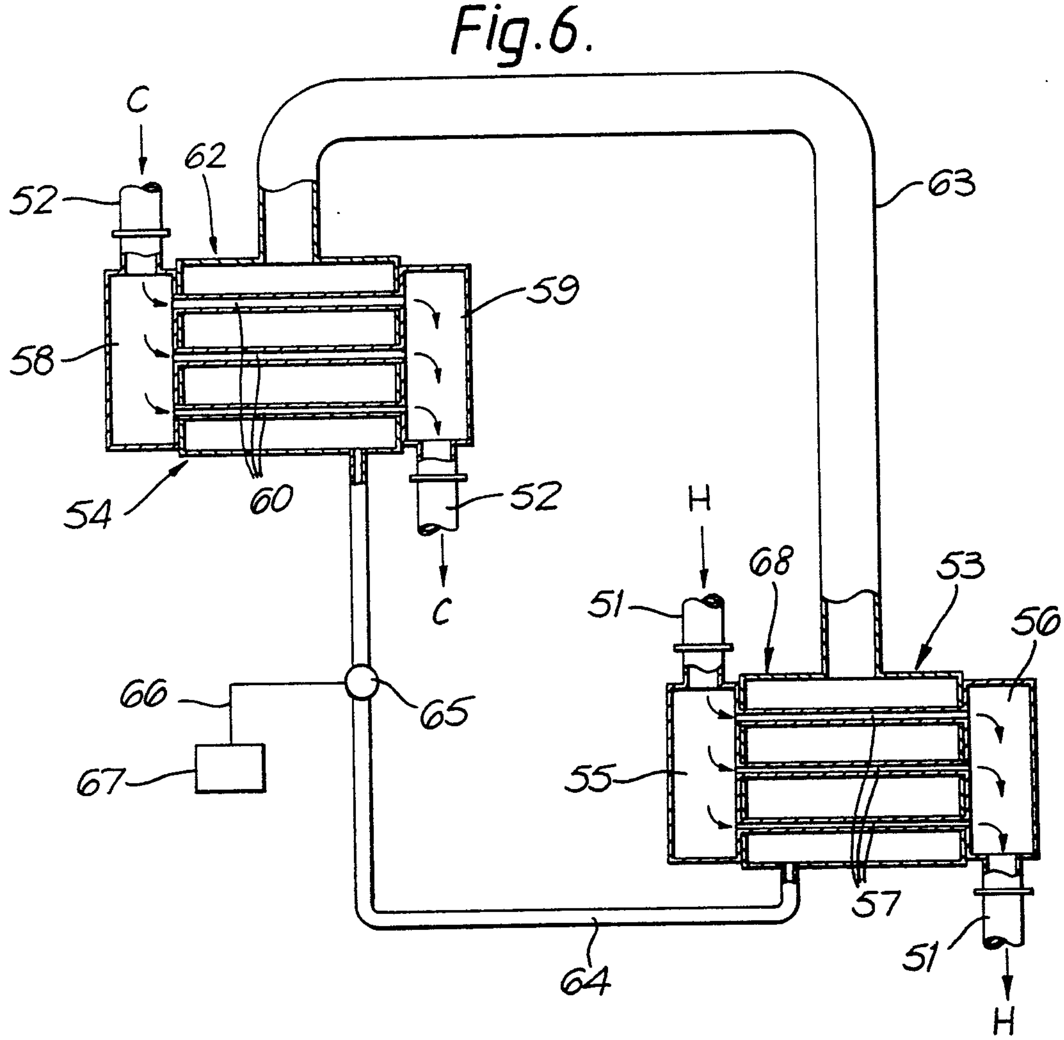
C
52
62
63
59
58
54
60
52
C
H
68
53
51
56
66
65
67
55
57
64
51
H

Fig. 7.

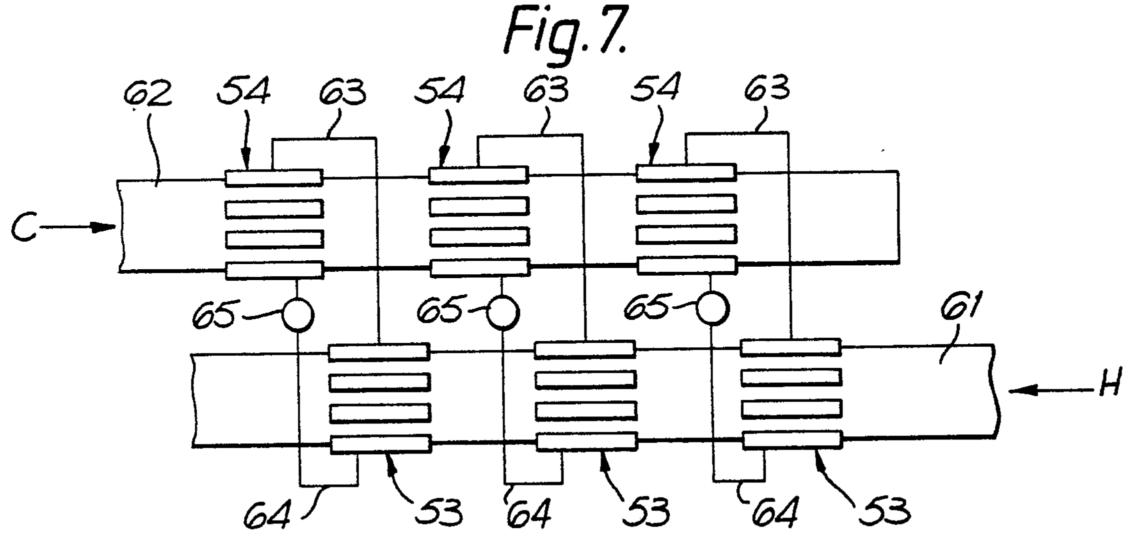
62
54
63
54
63
54
63
C
65
65
65
61
H
64
53
64
53
64
53